# EUROPÄISCHE PATENTSCHRIFT

(11) **EP 4 166 830 B1**
(45) Veröffentlichungstag und Bekanntmachung des Hinweises auf die Patenterteilung: **17.07.2024**
(21) Anmeldenummer: 22212634.4
(22) Anmeldetag: 23.02.2017
(51) Int. Cl.: F16K 41/04, F16J 15/18, F16L 27/08, B26F 3/00, B05B 3/02, B05B 15/652

(54) **ABDICHTSYSTEM EINER EINRICHTUNG ZUM DURCHLASSEN EINES MEDIUMS INSBESONDERE IM HOCHDRUCKBEREICH**
SEALING SYSTEM OF A DEVICE FOR PASSING A MEDIUM, IN PARTICULAR IN THE HIGH-PRESSURE AREA
SYSTÈME D'ÉTANCHÉITÉ D'UN DISPOSITIF DE PASSAGE D'UN FLUIDE, EN PARTICULIER DANS LE DOMAINE DE HAUTE PRESSION

(43) Veröffentlichungstag der Anmeldung: 19.04.2023
(62) Teilanmeldung aus: 17157634.1
(73) Patentinhaber: ALLFI AG, 6370 Stans (CH)
(72) Erfinder: TROXLER, Beat, 6026 Rain (CH)
(74) Vertreter: Luchs, Willi

(56) Entgegenhaltungen:
- EP-A2- 0 125 233
- US-A- 5 924 747

## Beschreibung

Die Erfindung betrifft ein Abdichtsystem einer Einrichtung zum Durchlassen eines Mediums insbesondere im Hochdruckbereich nach dem Oberbegriff des Anspruchs 1.

Derartige Abdichtsysteme eignen sich für Einrichtungen, wie Flüssigkeits-Schneidköpfe, Hochdruckventile, Drehgelenke, Pumpen oder ähnlichem, die mit einem Medium unter einem Druck von insbesondere mehreren 1000 bar arbeiten. Ein typischer Anwendungsbereich sind Einrichtungen zum Schneiden von Gegenständen mit einem mit hohem Druck versehenen Wasserstrahl.

Die Abdichtung der beweglichen Bauteile in derartigen Einrichtungen, wie etwa die hin- und herbewegbare Ventilnadel in einem Schneidkopf oder in einem Hochdruckventil oder das jeweils rotierende Wellenrohr in Drehgelenken, erfolgt in der Regel mit Kunststoffdichtungen, die sowohl eine möglichst leckfreie Dichtwirkung als auch eine geringe Reibung und eine lange Lebensdauer aufweisen sollen. Dabei wird versucht, mit geeigneten Geometrien die Extrusion der relativ weichen Dichtelemente in den Dichtspalt zu minimieren.

Bei den bisher bekannten Abdichtsystemen dieser Art werden entweder Stopfbüchsen oder Dichtelemente mit O-Ringen eingesetzt. Im ersten Fall werden Dichtelemente aus Kunststoff oft mit unterschiedlicher Härte zwischen zwei Stützringen vorgespannt. Sie bieten zwar den Vorteil einer leckagefreien Abdichtung des Bauteils, haben allerdings den Nachteil, dass bereits ein geringer Verschleiss die Undichtigkeit des Systems zur Folge haben kann. Das Dichtelement muss deshalb oft nachgespannt werden, wobei die Vorspannung grosse Reibkräfte erzeugt, die den Verschleiss erhöhen und die Funktionsfähigkeit der Einrichtung beeinträchtigen.

In der Druckschrift EP 0 125 233 A2 ist eine Drehdurchführung zur Führung von unter hohem Druck stehenden flüssigen Medien durch miteinander fluchtende Achsen aufweisende, gegeneinander verdrehbare Rohrteile für Flüssigstrahl-Schneideinrichtungen vorgesehen. Es ist ein einen Führungskanal für das Medium aufweisendes Gehäuseteil und ein mit seinem Führungskanal an den Gehäusekanal anschliessenden und am bzw. im Gehäuseteil um die Gehäuseachse drehbar gelagerter Drehkörper angeordnet. Der Gehäuseteil und/oder der Drehkörper ist zusätzlich über mindestens eine in kraftschlüssiger Verbindung stehender zylindermantelförmigen Führungsfläche und mindestens eine Führungsfläche zugekehrte, mit ihr kooperierende Führungsfläche mindestens einer koaxial mit den genannten Teilen angeordneten Hülse um die gemeinsame Achse drehbar gelagert.

US 5,924,747 offenbart ein Abdichtsystem gemäß dem Oberbegriff des Anspruchs 1.

Beim Einsatz vom Dichtelementen mit O-Ringen wird eine Weichdichtung aus Kunststoff mit einem O-Ring vorgespannt. Letzterer dient als äussere Abdichtung, wobei die Extrusion mit Hilfe der atmosphärseitigen Stützscheibe begrenzt wird, während der Flüssigkeitsdruck die Verspannung des Dichtelements übernimmt. Es ist bei derartigen Abdichtsystemen von Vorteil, dass sich die Dichtung bei Abnützung bis zu einem gewissen Grad selber nachstellt. Darüberhinaus ist die Vorspannung des Dichtelements druckabhängig. Nachteilig ist allerdings, dass keine leckagefreie Abdichtung insbesondere bei den hohen Drücken garantiert ist.

Die Erfindung liegt die Aufgabe zugrunde, diese Nachteile zu beheben und ein Abdichtsystem der eingangs genannten Art zu schaffen, das mit einfachen Mitteln und möglichst geringem Bearbeitungsaufwand die sichere Abdichtung des in der Bohrung rotierenden Bauteiles bei den hohen Drücken des zu steuernden Mediums sicherstellt.

Diese Aufgabe ist erfindungsgemäss durch die Merkmale des Anspruchs 1 gelöst.

Es ist erfindungsgemäss eine zusätzliche Metalldichtung von dem Gehäuse und einer den Bauteil umgebenden Druckscheibe gebildet, oder alternativ umgibt das Gehäuse den Bauteil selbst. Damit ist der Aussenbereich nach dem Dichtelement dicht abgeschlossen.

Auf diese Weise wird das Dichtelement aussen komplett dicht eingekapselt. Die Abdichtstelle an seinem Aussendurchmesser entfällt und seine Dichtwirkung beschränkt sich auf den unproblematischeren Innendurchmesser zwischen der Druckscheibe oder dem Gehäuse und dem darin oszillierenden und/oder rotierenden Bauteil.

Ein weiterer erheblicher Vorteil besteht darin, dass das Dichtelement aufgrund seiner Beaufschlagung mit dem Medium selbsttätig durch den Flüssigkeitsdruck vorgespannt wird.

Es ist im Sinne einer einfachen Bearbeitung der Abdichtung zweckmässig, wenn die Metalldichtung durch zwei sich gegenüberstehende Dichtflächen des Gehäuses und der Druckscheibe gebildet ist.

Es ist in einer ersten Variante vorgesehen, dass die sich gegenüberstehenden Dichtflächen des Gehäuses und der Druckscheibe in einem Winkel von vorzugsweise 30° bis 60° zur Längsachse der Bohrung geneigt sind.

Bei der Erfindung sind sie mit einem Winkel von nahezu 90° senkrecht zur Längsachse der Bohrung ausgerichtet. Beide Ausführungen sind fertigungstechnisch vorteilhaft. Selbstverständlich können aber auch andere Neigungswinkel vorgesehen sein.

Die Erfindung sieht ausserdem vor, dass das Dichtelement ringförmig ist und konisch auslaufende Stirnseiten aufweist, deren Konizität so bemessen ist, dass das Dichtelement dichtend gegen eine entsprechend konisch ausgebildete Abstützfläche der Druckscheibe andrückbar ist. Das Dichtelement ist zweckmässigerweise als Weichdichtung aus Kunststoffmaterial hergestellt. Seine konische Stirnseite sorgt dann für einen grossen Nachstellbereich der Weichdichtung, die bei Verschleiss vom Flüssigkeitsdruck zur Erhaltung der Dichtfunktion weiter in den Konus gedrückt wird.

Das ringförmige Dichtelement kann auch mit annähernd senkrecht zur Längsachse der Bohrung ausgerichteten Stirnseiten versehen sein. Dementsprechend ist dann die Stützfläche der Druckscheibe auch senkrecht zur Längsachse der Bohrung ausgerichtet.

Das erfindungsgemässe Abdichtsystem eignet sich besonders sowohl für Hochdruckventile zum Abdichten der in der Führungsbohrung für Drehgelenke zum Abdichten des in der Führungsbohrung rotierenden Wellenrohrs des Gelenks.

Die Erfindung wird nachfolgend anhand zweier Ausführungsbeispiele unter Bezugnahme auf die Zeichnung näher erläutert. Es zeigen:
- Fig. 1: einen Längsschnitt eines Abdichtsystems eines Hochdruckventils als Einrichtung, welches nicht Gegenstand der Erfindung ist;
- Fig. 2: einen teilweisen Längsschnitt des Abdichtsystems des Hochdruckventils nach Fig. 1;
- Fig. 3: eine Einzelheit der Metalldichtung nach Fig. 2, vergrössert dargestellt,
- Fig. 4: einen teilweisen Längsschnitt eines Abdichtsystems eines Schneidkopfs als Einrichtung, welches nicht Gegenstand der Erfindung ist; und
- Fig. 5: einen Längsschnitt eines erfindungsgemässen Abdichtsystems eines Drehgelenks als Einrichtung.

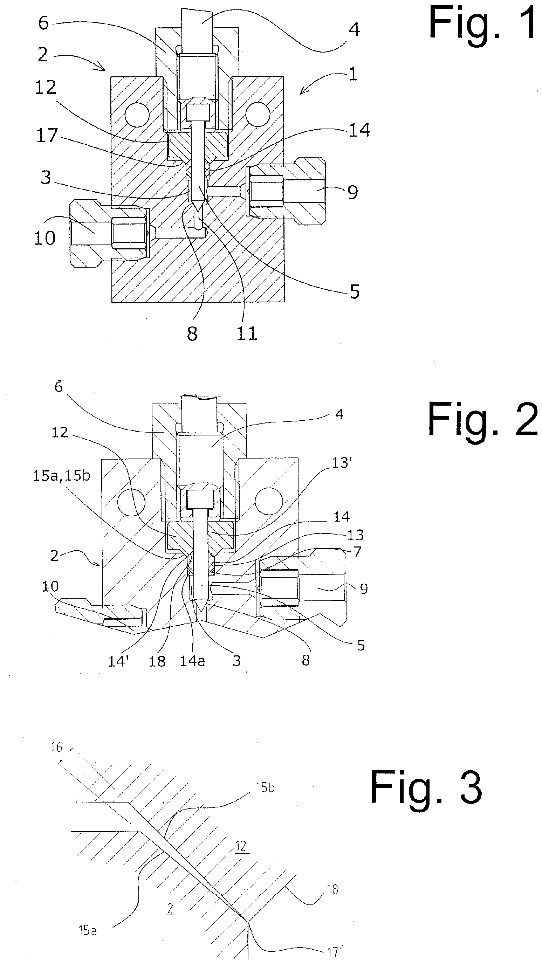

Fig. 1 und Fig. 2 zeigen eine nicht erfindungsgemäße Einrichtung eines als Spindelventil arbeitenden Hochdruckventils 1, welches zum Beispiel für einen Schneidkopf mit einer Wasserdüse zum Schneiden von Materialien mit einem unter Hochdruck stehenden Wasserstrahl verwendbar ist.

Dieses Hochdruckventil 1 besteht aus einem Gehäuse 2 mit einer Drucckammer 3, einer Spindelmutter 6 mit einem als Ventilnadel 5 vorgesehenen Bauteil sowie einer von Hand oder maschinell, zum Beispiel pneumatisch betätigbaren Spindel 4, mittels denen die Ventilnadel 5 gegen einen Ventilsitz 8 im Gehäuse 2 andrückbar ist. Das Gehäuse 2 weist ausserdem einen Wasserein- 9 und -auslass 10 oder umgekehrt auf, die bei offenem Ventil über einen Kanal 11 miteinander verbindbar sind. Zudem ist im Gehäuse 2 eine Druckscheibe 12 mit einer Bohrung 13' zum Führen der Ventilnadel 5 beim Schliessen und Öffnen des Hochdruckventils angeordnet.

Bei dem Abdichtsystem ist zwischen der Druckkammer 3 und der Druckscheibe 12 in der im Gehäuse 2 vorgesehenen Bohrung 13 ein die Ventilnadel 5 umgebendes Dichtelement 14 in Gestalt einer ringförmigen Weichdichtung aus Kunststoff angeordnet und zusätzlich ist der Aussenbereich 14' des Dichtelements 14 durch eine Metalldichtung 17 dicht abgeschlossen.

Diese Metalldichtung 17 ist mit sich gegenüberstehenden Dichtflächen 15a, 15b des Gehäuses 2 und der auf dieses angedrückten Druckscheibe 12 bewerkstelligt. Somit entfällt die sonst erforderliche Abdichtstelle am Aussendurchmesser des Dichtelementes, und die Abdichtfunktion des Dichtelements 14 beschränkt sich primär auf den unproblematischeren Innendurchmesser der Weichdichtung.

Diese Dichtflächen 15a, 15b sind vorteilhaft in einem Neigungswinkel von vorzugsweise 30° bis 60°, beispielsweise wie dargestellt 45°, zur Längsachse der Führungsbohrung 13 angeordnet. Das Dichtelement 14 weist seinerseits konisch auslaufende Stirnseiten auf, deren Konizität so ausgebildet ist, dass sie dichtend gegen eine entsprechend konisch ausgebildete Abstützfläche 18 der Druckscheibe 12 andrückbar sind. Dadurch ist es möglich, die Dichtung innerhalb eines grösseren Bereiches nachzustellen, indem der Flüssigkeitsdruck bei Verschleiss das Dichtelement 14 zur Erhaltung der Dichtfunktion weiter in der Konus hineindrückt. Der Neigungswinkel kann aber auch je nach Einzelfall innerhalb bestimmter Grenzen variieren.

Gemäss Fig. 2 ist dem Dichtelement 14 bei der die Druckkammer 3 begrenzenden Stirnseite ein Verstärkungselement, vorzugsweise ein Metallring 7, zugeordnet. Damit ist der Aussenbereich 14' des Dichtelementes 14 vor der hohen Strömungsgeschwindigkeit des durchfliessenden Fluids geschützt.

Gemäss Fig. 3 weichen die Neigungswinkel der Dichtflächen 15a, 15b voneinander um einen kleinen Winkelbetrag 16 ab, damit die Metalldichtung 17 innenseitig in der Form einer kreisförmigen Dichtkante 17' erzeugt ist. Durch die auf diese Weise hergestellte Metalldichtung kann eine plastische Verformung der Materialien bei dieser Dichtkante 17' erzielt werden und somit ist das Dichtelement 14 aussen komplett dicht eingekapselt und es ist eine einwandfreie Dichtung auch bei höchsten Drücken dauerhaft gewährleistet.

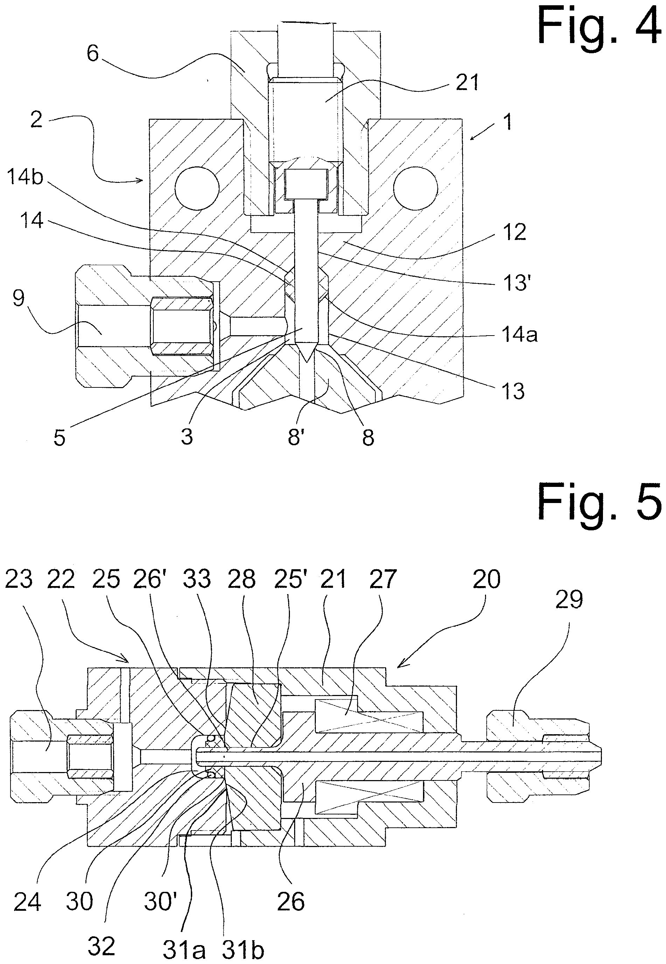

Das nicht erfindungsgemäße Abdichtsystem gemäss Fig. 4 unterscheidet sich von demjenigen nach Fig. 1 lediglich dadurch, dass bei ihr das Gehäuse 2 und die Druckscheibe quasi aus einem einzigen Stück hergestellt sind und demzufolge das Gehäuse 2 selbst diese das Bauteil bildende Ventilnadel 5 umgibt und lagert. Dies vereinfacht die Fertigung dieser Teile und es entfällt auch die Funktion der Spindelmutter 6 als Stütz- und Andrückmittel der Druckscheibe 12 gegen die Gegenfläche des Gehäuses. Das Dichtelement 14 ist ringförmig mit konisch auslaufenden Stirnseiten 14a, 14b ausgebildet, wobei der Aussenbereich bei der Stirnseite 14b in den Innenbereich bei der Ventilnadel 5 übergeht und damit eine optimale Dichtung erzielt wird.

Das Dichtelement 14 ist in die zylindrische Bohrung 13 des Gehäuses 2 sowohl aussen als auch innen auf das Bauteil 5 vorteilhaft eingepresst. Mit seiner unteren Stirnseite 14a begrenzt es die Druckkammer 3, so dass es im Betriebszustand vom Medium beaufschlagt ist. Ein von dem Gehäuse 2 entfernbarer bzw. auswechselbarer Ventilsitzblock 8' mit dem Ventilsitz 8 für die Ventilnadel ermöglicht ein Einschieben des Dichtelements 14 in die Bohrung 13, wenn diese entfernt ist. Dieser Ventilsitzblock 8' ist nur teilweise veranschaulicht.

Das in Fig. 5 gezeigte Drehgelenk 20 ist Bestandteil einer Einrichtung mit einem unter hohem Druck stehenden Wasserstrahl vorzugsweise zum Reinigen von Gegenständen oder für die Anwendung bei Robotern zum Schneiden von Gegenständen, bei der häufige Drehbewegungen erfolgen. Dieses Drehgelenk 20 besteht im Wesentlichen aus einem mehrteiligen Gehäuse 22 mit einem Gehäusedeckel 21, einem Wassereinlass 29 und einer Druckkammer 24 sowie darüberhinaus aus einem in einer Bohrung 25' geführten Wellenrohr 26 mit einem Kugellager 27, einer Druckscheibe 28, einem Verbindungsglied 23 und einem Dichtelement 30, das in einen erweiterten Bereich der Bohrung 25 eingelegt ist.

Erfindungsgemäss ist eine zusätzliche Metalldichtung 33 von dem Gehäuse 22 und dieser den hülsenförmigen Bauteil 26' umgebenden Druckscheibe 28 gebildet und damit ist der Aussenbereich 30' nach dem Dichtelement 30 dicht abgeschlossen.

Das Dichtelement 30 ist vorteilhaft ebenso als Weichdichtung aus Kunststoffmaterial hergestellt. Die Metalldichtung 33 ihrerseits ist durch zwei sich gegenüberstehende Dichtflächen 31a, 31b des zylindrischen Gehäuseteils und der Druckscheibe 28 gebildet. Zweckmässigerweise sind die Neigungswinkel der Dichtflächen 31a, 31b ebenso um einen kleinen Winkelbetrag voneinander abweichend angeordnet, damit innenseitig die Bildung einer kreisförmigen Dichtkante gebildet ist. Zudem ist die Druckscheibe 28 nach aussen kegelförmig ausgebildet.

Im Unterschied zu der Metalldichtung 17 nach Fig. 1 verlaufen die Dichtflächen 31a, 31b um nahezu 90° zur Längsachse der Bohrung 25. Ein weiterer Unterschied besteht darin, dass die Kontaktflächen des Dichtelements 30 und der Druckscheibe 28 nicht konisch, sondern ebenfalls annährend senkrecht zur Längsachse der Bohrung 25 geneigt sind.

Das Dichtelement 30 ist zusätzlich mit einem aussen angeordneten O-Ring 32 als Hilfsdichtung ausgestattet, um alternativ eine zusätzliche Aussenabdichtung zu der Metalldichtung zu bilden.

Das hülsenförmige Bauteil 26' des Wellenrohrs ist vorteilhaft aussen mit einer Beschichtung versehen, damit es in der Bohrung 25' besser gleitet. Es wird vorzugsweise eine PVD oder PACVD (Plasma Assisted Chemical Vapour Deposition) basierende Beschichtung verwendet.

Im Prinzip könnte auch das als Ventilnadel vorgesehene Bauteil 5 und/oder die dieses jeweilige Bauteil führende Bohrung 13', 25' der Druckscheibe 12, 28 bzw. des Gehäuses 2 mit dieser Beschichtung versehen sein.

Die Erfindung ist mit den oben erläuterten Ausführungsbeispielen ausreichend dargetan. Sie könnte aber selbstverständlich noch mit weiteren Varianten erläutert sein, wie zum Beispiel**,** jedoch nicht erfindungsgemäß, für eine Kolbenabdichtung einer Hochdruckpumpe, bei der als Bauteil ein hin- und herbeweglicher Kolben vorgesehen ist.

Diese Abdichtsysteme sind besonders geeignet für bewegliche Bauteile, die eher kleine Durchmesser von nur einigen Millimetern aufweisen und mit durchzulassenden Medien mit einem besonders hohen Druck von mehreren tausend bar arbeiten müssen. Das Abdichtsystem hat sich in der Praxis insbesondere bei Drücken ab 4000 bar sehr bewährt. Es ist mit Drücken über 6200 bar belastbar und könnte theoretisch bis über 10'000 bar belastet werden.

## Patentansprüche

1. Abdichtsystem für eine Einrichtung zum Durchlassen eines Mediums insbesondere im Hochdruckbereich, mit einem eine Bohrung (25) aufweisenden Gehäuse (22), einem darin gelagerten Bauteil (26) und mit einer in der Bohrung (25) gebildeten mit dem Medium beaufschlagbaren Druckkammer (24), an die wenigstens ein das Bauteil (26) umgebendes Dichtelement (30) anschliesst, wobei eine zusätzliche Dichtung (33) von dem Gehäuse (22) und einer den Bauteil (26) umgebenden Druckscheibe (28) gebildet ist, und damit ein Aussenbereich (30') nach dem Dichtelement (30) dicht abgeschlossen ist, wobei das Bauteil (26) zum Durchlassen des Mediums in die Drucckammer (24) hülsenförmig ausgebildet ist, wobei die Druckkammer (24) zwischen dem Gehäuse (22) mit der Bohrung (25), dem hülsenförmigen Bauteil (26) und dem das Bauteil (26) umgebenden Dichtelement (30) gebildet ist, wobei die zusätzliche Dichtung (33) durch zwei sich gegenüberstehende Dichtflächen (31a, 31b) des Gehäuses (22) und der Druckscheibe (28) gebildet ist, wobei
die zusätzliche Dichtung (33) eine Metalldichtung (33) ist, und
wobei die Neigungswinkel der Dichtflächen voneinander um einen kleinen Winkelbetrag abweichen, wodurch innenseitig die Bildung einer kreisförmigen Dichtkante bewirkt wird,
**dadurch gekennzeichnet, dass**
das Bauteil (26) rotierend im Gehäuse (22) gelagert ist.

2. Abdichtsystem nach Anspruch 1, **dadurch gekennzeichnet, dass** das Dichtelement (30) in die zylindrische Bohrung (25) des Gehäuses (22) vorzugsweise eingepresst ist und mit seiner einen Stirnseite die Druckkammer (24) begrenzt, so dass es im Betriebszustand vom Medium beaufschlagbar ist.

3. Abdichtsystem nach Anspruch 1, **dadurch gekennzeichnet, dass** das Dichtelement (30) ringförmig mit annähernd senkrecht zur Längsachse der Bohrung (25) ausgerichteten Stirnseiten ausgebildet ist und dichtend gegen eine entsprechend senkrecht zur Längsachse der Bohrung (25) verlaufenden Abstützfläche der Druckscheibe (28) andrückbar ist.

4. Abdichtsystem nach einem oder mehreren der Ansprüche 1 bis 3, **dadurch gekennzeichnet, dass**
das Dichtelement (30) als Weichdichtung aus einem Kunststoffmaterial hergestellt ist.

5. Abdichtsystem nach einem oder mehreren der Ansprüche 1 bis 4, **dadurch gekennzeichnet, dass**
das Dichtelement (30) vorzugsweise aussen mit mindestens einem O-Ring (32) als Hilfsdichtung versehen ist.

6. Abdichtsystem nach Anspruch 1, **dadurch gekennzeichnet, dass** die sich gegenüberstehenden Dichtflächen (31a, 31b) der Metalldichtung (33) in einem Winkel von nahezu 90° senkrecht zur Längsachse der Bohrung (25) ausgerichtet sind.

7. Abdichtsystem nach einem der Ansprüche 1 bis 6, **dadurch gekennzeichnet, dass**
das beweglich gelagerte Bauteil (26) und/oder eine dieses führende Bohrung (25') der Druckscheibe (28) mit einer PVD oder PACVD basierenden Beschichtung versehen sind.

## Claims

1. A sealing system of a device for allowing the passage of a medium, in particular in the high pressure range, comprising a housing (22) that has a bore hole (25), a component (26) mounted within said housing and with a pressure chamber (24) formed within the bore hole (25), which can be charged with the medium, to which at least one sealing element (30) is adjoining, which surrounds the component (26), whereby an additional seal (33) is formed by the housing (22) and a pressure disc (28) surrounding the component (26), and so an outer region (30') is tightly closed after the sealing element (30), whereby the component (26) is sleeve-shaped for allowing the passage of the medium into the pressure chamber (24), whereby the pressure chamber (24) is formed between the housing (22) with the bore hole (25), the sleeve-shaped component (26) and the sealing element (30) surrounding the component (26), whereby the additional seal (33) is formed by two opposing sealing surfaces (31a, 31b) of the housing (22) and of the pressure disc (28), whereby the additional seal (33) is a metal seal (33), and that the angles of inclination of the sealing surfaces differing from one another by a small angular amount, by means of which the formation of a circular sealing edge is brought about on the inside, **characterised in that**
the component (26) is mounted rotatable in the housing (22).

2. The sealing system according to Claim 1, **characterised in that** the sealing element (30) is preferably pressed into the cylindrical bore hole (25) of the housing (22) and borders the pressure chamber (3) with it one front side, so that it is chargeable with the medium in the operational state.

3. The sealing system according to Claim 1, **characterised in that** the sealing element (30) is shaped annularly with approximately perpendicular to the longitudinal axis of the bore hole (25) inclined front sides, and is sealed pressable against a support surface of the pressure disc (28), which is extending respectively perpendicular to the longitudinal axis of the bore hole (25).

4. The sealing system according to one or more of Claims 1 to 3, **characterised in that**
the sealing element (30) is produced as a soft seal made of plastic material.

5. The sealing system according to any one or more of Claims 1 to 4, **characterised in that**
the sealing element (30) preferably is equipped on the outside with at least an O-ring (32) disposed as an auxiliary seal.

6. The sealing system according to Claim 1, **characterised in that** the opposing sealing surfaces (31a, 31b) of the metal seal (33), are inclined at an angle of almost 90° perpendicular to the longitudinal axis of the bore hole (25).

7. The sealing system according to any one of Claims 1 to 6, **characterised in that**
the moveably mounted component (26) and/or the bore hole (25') of the pressure disc (28) guiding this component are provided with a PVD or PACVD based coating.

## Revendications

1. Système d'étanchéité pour un dispositif de passage d'un fluide, en particulier dans le domaine de la haute pression, comprenant un corps (22) ayant un trou (25), une pièce (26), qui y est montée, et comprenant une chambre (24) de pression, qui est formée dans le trou (25), qui peut être alimentée en le fluide et à laquelle se raccorde au moins un élément (30) d'étanchéité entourant la pièce (26), dans lequel une étanchéité (33) supplémentaire est formée par le corps (22) et un disque (28) de pression entourant la pièce (26) et ainsi une région (30') extérieure, après l'élément (30) d'étanchéité, est fermée de manière étanche, dans lequel la pièce (26) est constituée en forme de manchon pour le passage du fluide dans la chambre (24) de pression, dans lequel la chambre (24) de pression est formée entre le corps (22) ayant le trou (25), la pièce (26) en forme de manchon et l'élément (30) d'étanchéité entourant la pièce (26), dans lequel l'étanchéité (33) supplémentaire est formée par deux surfaces (31a, 31b) d'étanchéité se faisant face du corps (22) et du disque (28) d'étanchéité, dans lequel l'étanchéité (33) supplémentaire est une étanchéité (33) métallique et en ce que l'angle d'inclinaison des surfaces d'étanchéité l'une par rapport à l'autre, s'écarte d'un petit montant angulaire, grâce à quoi, il est provoqué du côté intérieur la formation d'un bord d'étanchéité circulaire, **caractérisé en ce que**
la pièce (26) est montée tournante dans le corps (22).

2. Système d'étanchéité suivant la revendication 1, **caractérisé en ce que**
l'élément (30) d'étanchéité est, de préférence, enfoncé dans le trou (25) cylindrique du corps (22) et délimite par l'un de ses côtés frontaux la chambre (24) de pression, de manière à ce qu'elle puisse être alimentée en fluide dans l'état de fonctionnement.

3. Système d'étanchéité suivant la revendication 1, **caractérisé en ce que**
l'élément (30) d'étanchéité est de conformation annulaire en ayant des côtés frontaux dirigés à peu près perpendiculairement à l'axe longitudinal du trou (25) et peut être poussé avec étanchéité sur une surface d'appui correspondante, s'étendant perpendiculairement à l'axe longitudinal du trou (25), du disque (28) de pression.

4. Système d'étanchéité suivant l'une ou plusieurs des revendications 1 à 3, **caractérisé en ce que**
l'élément (30) d'étanchéité est fabriqué en tant qu'étanchéité souple en une matière plastique.

5. Système d'étanchéité suivant l'une ou plusieurs des revendications 1 à 4, **caractérisé en ce que**
l'élément (30) d'étanchéité est pourvu de préférence à l'extérieur d'au moins un joint (32) torique comme étanchéité auxiliaire.

6. Système d'étanchéité suivant la revendication 1, **caractérisé en ce que**
les surfaces (31a, 31b) d'étanchéité, se faisant face, de l'étanchéité (33) métallique sont dirigées suivant un angle d'à peu près 90° perpendiculairement à l'axe longitudinal du trou (25) .

7. Système d'étanchéité suivant l'une des revendications 1 à 6, **caractérisé en ce que**
la pièce (26) montée mobile et/ou un trou (25'), qui l'a guide, du disque (28) de pression, sont pourvus d'un revêtement à base de PVD ou de PACVD.
